# FASCICULE DE BREVET EUROPEEN

(11) **EP 1 890 792 B1**
(45) Date de publication et mention de la délivrance du brevet: **16.05.2012**
(21) Numéro de dépôt: 06794437.1
(22) Date de dépôt: 18.05.2006
(51) Int. Cl.: B01D 53/04, F15D 1/00

(54) **INSTALLATION DE TRAITEMENT DE FLUIDE ET UTILISATION D'UNE TELLE INSTALLATION POUR LE TRAITEMENT D'UN GAZ PAR ADSORPTION**
FLÜSSIGKEITSVERARBEITUNGSANLAGE UND VERWENDUNG DAVON ZUR BEARBEITUNG EINES GASES DURCH ADSORPTION
FLUID TREATMENT PLANT AND USE THEREOF FOR TREATING A GAS BY ADSORPTION

(30) Priorité: 01.06.2005 FR 0551463
(43) Date de publication de la demande: 27.02.2008
(73) Titulaire: L'AIR LIQUIDE, Société Anonyme pour l'Etude et l'Exploitation des Procédés Georges Claude, 75321 Paris Cedex 07 (FR)
(72) Inventeur: MONEREAU, Christian, F-75011 Paris (FR); MERINO, Philippe, F-92400 Courbevoie (FR)
(74) Mandataire: Mercey, Fiona Susan
(86) Numéro de dépôt international: PCT/FR2006/050453
(87) Numéro de publication internationale: WO 2006/129033

(56) Documents cités:
- WO-A-03/089104
- FR-A- 2 737 975
- FR-A- 2 856 607

## Description

La présente invention concerne les installations de traitement de fluide au moyen d'un matériau particulaire comprenant au moins une portion dans laquelle le trajet de fluide est contraint de subir une déviation d'au moins 45° entre une première direction et une deuxième direction, la portion de modification de trajet comprend un distributeur comportant, en série dans la deuxième direction, une première zone avec des premiers passages de distribution et une deuxième zone, espacée de la première zone, avec des passages de diffusion..

Il est connu, que lorsqu'on veut répartir un fluide de façon homogène à travers une surface perméable au fluide, on utilise un système faisant partiellement obstacle à la libre circulation de ce fluide. Les pertes de charge ainsi créées permettent une bonne distribution du fluide sur ladite surface, indépendamment des modalités de la circulation amont du fluide. Un exemple simple est celui d'un tube perforé. Pour obtenir une distribution homogène du fluide, il convient que la perte de charge à travers les perforations soit égale à plusieurs fois l'énergie cinétique du fluide à l'entrée de la zone de perforations, ce qui impose la création de micro-perforations très nombreuses ou l'utilisation de matériaux poreux dont les coûts à l'échelle industrielle sont prohibitifs et présentent, en association avec un matériau de traitement de fluide de type particulaire, par exemple un adsorbant, des risques importants de bouchage.

Le document FR 2 737 975 décrit un appareil, par exemple de type PSA, comportant des moyens de circulation de gaz pour faire transiter horizontalement le gaz à travers un adsorbant qui comprennent, sur au moins un côté vertical de l'adsorbant, un volume de distribution de gaz comprenant un premier sous-volume adjacent à l'adsorbant et un deuxième sous-volume séparé du premier sous-volume par une paroi munie de passages ayant des sections et/ou une répartition sélectionnées pour réduire les variations de débits locaux le long de l'adsorbant.

La présente invention a pour objet de proposer un agencement d'installation de traitement de fluide avec distribution optimisée de fluide entre un premier volume où le fluide circule selon une première direction et un second volume où il circule dans une autre direction, typiquement perpendiculaire à la première, avec un minimum de volume mort et en réduisant les risques de bouchage même en présence de matériau de traitement constitué de particules fines.

Pour ce faire, une solution de l'invention est une installation de traitement de fluide au moyen d'un matériau particulaire adsorbant contenu entre 2 parois perforées concentriques (2) et (3), la deuxième paroi (3) étant plus à l'intérieur que la première paroi (2), comprenant au moins une portion où le trajet de fluide est contraint de subir une déviation d'au moins 45° entre une première (I) et une deuxième (O) directions, cette portion comprenant un distributeur comportant, en série dans la deuxième direction (O), une première zone (5) formée par un tube central (5) avec des premiers passages de distribution (6) et une deuxième zone (3) formée par la deuxième paroi (3), espacée de la première zone, avec des passages de diffusion caractérisée en ce que les premiers passages (6) de distribution ont une section totale n'excédant pas 20% de la surface de la première zone (5) et les passages de diffusion ont une section totale supérieure à 40% de la surface de la deuxième zone (3).

Les premiers passages de distribution ont une section totale n'excédant pas 20%, typiquement inférieure à 10% avantageusement n'excédant pas 5%, de la surface de la première zone 5 provoquant ainsi une forte perte de charge et les passages de diffusion ont une section totale supérieure à 40%, typiquement supérieure à 60%, avantageusement supérieure à 80% de la surface totale de la deuxième zone 3, provoquant de ce fait une très faible perte de charge.

Selon des caractéristiques particulières de l'invention :
- l'installation ne comprend qu'un seul distributeur
- la première zone est formée par une tôle perforée
- la deuxième zone est formée par un tamis à maille fine
- la deuxième zone forme une paroi de rétention d'un matériau particulaire de traitement de fluide.

Par surface du distributeur, on entend la surface développée du corps géométrique simple (cylindre, cône, plan) représentant le plus étroitement possible l'interface de distribution entre l'amont et l'aval du distributeur.

La présente invention concerne également l'utilisation d'une telle installation pour le traitement d'un gaz par séparation par adsorption à variation de pression et / ou de température, notamment pour la production d'un gaz à partir d'un mélange gazeux contenant ce gaz.

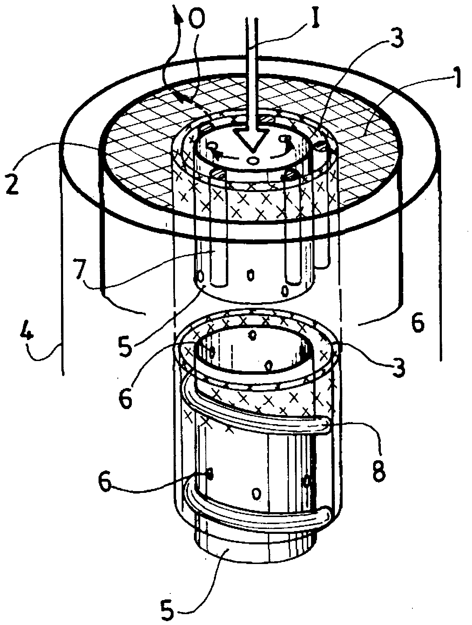

D'autres caractéristiques et avantages de l'invention ressortiront de la description suivante de mode de réalisation donné à titre illustratif, faite en relation avec le dessin annexé sur lequel :
- la figure unique représente schématiquement en perspective et en fantôme deux modes de réalisation d'une installation selon l'invention.

Sur la figure unique, on a représenté de façon schématique une portion d'une installation de traitement de fluide opérant par passage de ce fluide radialement au travers d'un volume annulaire 1 comprenant au moins un matériau particulaire adsorbant contenu entre deux parois perforées concentriques 2 et 3, l'ensemble étant disposé dans une virole périphérique également concentrique 4.

Conformément à un aspect de l'invention, la portion de distributeur entre le flux de fluide d'entrée I, typiquement coaxial aux parois 1, 2 et 3, et renvoyant ce fluide radialement, suivant la direction O, au travers du volume d'adsorbant 1, comprend un tube central 5 muni de perforations 6 et maintenu écarté de la grille intérieure 3 par des entretoises longitudinales 7 (haut de la figure) ou hélicoïdales 8 (bas de la figure) rapportées, par exemple par brassage sur la paroi externe du tube 5.

Selon une caractéristique de l'invention, les perforations 6 du tube 5 sont dimensionnées pour constituer des passages de distribution, c'est à dire avec une section de passage réduite par rapport à la surface de la paroi du tube 5 et provoquant une forte perte de charge, alors que les passages de la grille 3 sont dimensionnés pour former des passages de diffusion, c'est à dire offrant une section de passage importante par rapport à la surface développée de l'interface tube / grille et provoquant de ce fait une très faible perte de charge. Plus spécifiquement, les orifices 6 sont des orifices calibrés en forme de trous ou de fentes de dimensions moyennes, régulièrement répartis en petit nombre sur la surface du tube 5, alors que la grille 3, réalisée en mailles fines, en métal ou en toile, offre une section de passage importante avec des passages nombreux répartis sur toute la surface de la grille.

Selon une caractéristique de l'invention, les ratios de surfaces de passages entre les deuxièmes passages et les premiers passages sont supérieurs à 2, typiquement supérieurs à 5, avantageusement supérieurs à 10. Plus spécifiquement les premiers passages ou orifices 6 ont une section totale n'excédant pas 20%, typiquement n'excédant pas 5%, de la surface de la paroi du tube 5, alors que les passages de la grille 3 représentent une section de passage supérieure à 40%, typiquement supérieure à 60%, avantageusement supérieure à 80%, de la surface de la grille.

On comprendra que, dans l'application avec traitement du fluide par passage dans au moins un matériau particulaire contenu entre les grilles 2 et 3, l'importante surface de passage offerte par la grille 3 rend cette dernière relativement insensible aux risques de bouchage par les particules du matériau adsorbant 1.

La présente invention trouve une application préférentielle dans le traitement de gaz par adsorption à variation de pression ou variation de température dans des adsorbeurs à circulation radiale de gaz dans au moins une masse d'adsorbant comprenant au moins un composant susceptible d'adsorber un des constituants du mélange gazeux, typiquement une zéolite, un tamis carboné, un gel de silice ou de l'alumine, pour la production de gaz ou l'épuration de mélange gazeux avant traitement ultérieur.

Bien que l'invention ait été décrite en relation avec des modes de réalisation particuliers, elle ne s'en trouve pas limitée mais est susceptible de modifications et de variantes qui apparaîtront à l'homme du métier dans le cadre des revendications ci-après.

## Revendications

1. Installation de traitement de fluide au moyen d'un matériau particulaire adsorbant contenu entre 2 parois perforées concentriques (2 et 3), dont la deuxième paroi (3) est plus à l'intérieur que la première paroi (2), comprenant au moins une portion où le trajet de fluide est contraint de subir une déviation d'au moins 45° entre une première (1) et une deuxième (O) directions, cette portion comprenant un distributeur comportant, en série dans la deuxième direction (O), une première zone (5) formée par un tube central (5) avec des premiers passages de distribution (6) et une deuxième zone (3) formée par la deuxième paroi (3), espacée de la première zone, avec des passages de diffusion **caractérisée en ce que** les premiers passages (6) de distribution ont une section totale n'excédant pas 20% de la surface de la première zone (5) provoquant ainsi une forte perte de charge et les passages de diffusion ont une section totale supérieure à 40% de la surface de la deuxième zone (3) provoquant de ce fait une très faible perte de charge.

2. Installation selon la revendication 1, **caractérisée en ce que** les premiers passages de distribution ont une section totale n'excédant pas 5% de la surface de la première zone (5).

3. Installation selon la revendication 1 ou la revendication 2, **caractérisée en ce que** les passages de diffusion ont une section totale supérieure à 80% de la surface de la deuxième zone (3).

4. Installation selon l'une des revendications précédentes, **caractérisée en ce que** la première zone est formée par une tôle perforée (5).

5. Installation selon l'une des revendications précédentes, **caractérisée en ce que** la deuxième zone est formée par un tamis (3) à mailles fines.

6. Installation selon la revendication 5, **caractérisée en ce qu'**elle comprend des éléments espaceurs (7 ; 8) entre la tôle (5) et le tamis (3).

7. Installation selon l'une des revendications précédentes, **caractérisée en ce que** la deuxième zone (3) forme paroi de rétention d'un matériau particulaire de traitement de fluide (1).

8. Installation selon l'une des revendications précédentes ne comprenant qu'un seul distributeur.

9. Utilisation d'une installation selon l'une des revendications 1 à 8 pour le traitement d'un gaz par adsorption à variation de pression ou de température.

## Claims

1. Assembly for treating fluid by means of an adsorbent particulate material contained between two concentric perforated walls (2 and 3), of which the second wall (3) is further inside than the first wall (2), comprising at least one portion where the fluid path is forced to deviate by at least 45° between a first (1) and a second (O) direction, said portion comprising a distributor having, in series in the second direction (O), a first zone (5) formed by a central tube (5) with first distribution passages (6) and a second zone (3) formed by the second wall (3), spaced from the first zone, with diffusion passages, **characterised in that** the first distribution passages (6) have a total cross-section not exceeding 20 % of the surface of the first zone (5), thus causing a large loss of head, and the diffusion passages have a total cross-section of more than 40 % of the surface of the second zone (3), thereby causing a very small loss of head.

2. Assembly according to claim 1, **characterised in that** the first distribution passages have a total cross-section not exceeding 5 % of the surface of the first zone (5).

3. Assembly according to either claim 1 or claim 2, **characterised in that** the diffusion passages have a total cross-section of more than 80 % of the surface of the second zone (3).

4. Assembly according to any one of the preceding claims, **characterised in that** the first zone is formed by a perforated plate (5).

5. Assembly according to any one of the preceding claims, **characterised in that** the second zone is formed by a fine-mesh sieve (3).

6. Assembly according to claim 5, **characterised in that** it comprises spacer elements (7; 8) between the plate (5) and the sieve (3).

7. Assembly according to any one of the preceding claims, **characterised in that** the second zone (3) forms a wall for retaining a particulate material for treating fluid (1).

8. Assembly according to any one of the preceding claims, comprising only one distributor.

9. Use of an assembly according to any one of claims 1 to 8 for treating a gas by pressure or temperature swing adsorption.

## Patentansprüche

1. Anlage zur Behandlung von Fluid mit Hilfe eines teilchenförmigen adsorbierenden Materials, das zwischen Zwei konzentrischen, mit Löchern durchsetzten Wänden (2 und 3) enthalten ist, wobei die zweite Wand (3) sich weiter im Innern befindet als die erste Wand (2), mit zumindest einem Abschnitt, in dem der Fluidweg gezwungen ist, eine Ablenkung von mindestens 45° zwischen einer ersten (1) und einer zweiten (O) Richtung zu erfahren, wobei dieser Abschnitt einen Verteiler umfasst, der in der zweiten Richtung (O) in Reihe eine erste Zone (5), die von einem mittigen Rohr (5) mit ersten Verteilungsdurchlässen (6) gebildet ist, und eine zweite Zone (3), die von der zweiten Wand (3), die von der ersten Zone beabstandet ist, mit Diffusionsdurchlässen gebildet ist, umfasst, **dadurch gekennzeichnet, dass** die ersten Verteilungsdurchlässe (6) einen Gesamtquerschnitt aufweisen, der 20 % der Oberfläche der ersten Zone (5) nicht übersteigt, wodurch ein hoher Lastverlust bewirkt wird, und die Diffusionsdurchlässe einen Gesamtquerschnitt aufweisen, der größer als 40 % der Oberfläche der zweiten Zone (3) ist, wodurch ein sehr geringer Lastverlust bewirkt wird.

2. Anlage nach Anspruch 1, **dadurch gekennzeichnet, dass** die ersten Verteilungsdurchlässe einen Gesamtquerschnitt aufweisen, der 5 % der Oberfläche der ersten Zone (5) nicht übersteigt.

3. Anlage nach Anspruch 1 oder 2, **dadurch gekennzeichnet, dass** die Diffusionsdurchlässe einen Gesamtquerschnitt aufweisen, der größer als 80% der Oberfläche der zweiten Zone (3) ist.

4. Anlage nach einem der vorhergehenden Ansprüche, **dadurch gekennzeichnet, dass** die erste Zone von einem mit Löchern durchsetzten Blech (5) gebildet ist.

5. Anlage nach einem der vorhergehenden Ansprüche, **dadurch gekennzeichnet, dass** die zweite Zone von einem feinmaschigen Sieb (3) gebildet ist.

6. Anlage nach Anspruch 5, **dadurch gekennzeichnet, dass** sie Abstandselemente (7; 8) zwischen dem Blech (5) und dem Sieb (3) umfasst.

7. Anlage nach einem der vorhergehenden Ansprüche, **dadurch gekennzeichnet, dass** die zweite Zone (3) eine Wand zum Rückhalten eines teilchenförmigen Materials zur Behandlung von Fluid (1) bildet.

8. Anlage nach einem der vorhergehenden Ansprüche mit nur einem einzigen Verteiler.

9. Verwendung einer Anlage nach einem der Ansprüche 1 bis 8 für die Behandlung eines Gases durch Adsorption bei Druckänderung oder Temperaturänderung.
